# EUROPÄISCHE PATENTSCHRIFT

(11) **EP 0 358 909 B1**
(45) Veröffentlichungstag und Bekanntmachung des Hinweises auf die Patenterteilung: **17.03.1993**
(21) Anmeldenummer: 89113960.2
(22) Anmeldetag: 28.07.1989
(51) Int. Cl.: B60K 28/16, B60T 8/32

(54) **Antriebsschlupfregeleinrichtung für Kraftfahrzeuge**
Drive slip regulating device for motor vehicles
Installation de régulation de patinage pendant l'entraînement pour véhicules automobiles

(30) Priorität: 13.09.1988 DE 3831105
(43) Veröffentlichungstag der Anmeldung: 21.03.1990
(73) Patentinhaber: DAIMLER-BENZ AKTIENGESELLSCHAFT, 70327 Stuttgart (DE)
(72) Erfinder: Hilburger, Walter, D-7440 Nürtingen (DE); Ochs, Siegfried, D-7064 Remshalden (DE)

(56) Entgegenhaltungen:
- DE-A- 3 331 297
- DE-A- 3 544 294
- DE-C- 3 644 136

## Beschreibung

Die Erfindung betrifft eine Antriebsschlupfregeleinrichtung (ASR) gemäß dem Oberbegriff des Anspruches 1.

Es ist bereits eine gattungsgemäße ASR bekannt (DE-A-35 44 294), bei welcher die Motorleistung zu Beginn und am Ende eines ASR-Regelvorganges derart geregelt wird, daß sowohl beim Herab- als auch beim Hochregeln zunächst ein steiler und danach ein flacher Anstieg erfolgt. Hierbei ist ein von einer Elektronik ansteuerbares Zeitglied vorgesehen, welches zur Erzielung der gewünschten Knick-Charakteristik beiträgt.

Antriebsschlupf-Regelungen sollen ein unkontrolliertes Durchdrehen der Antriebsräder beim Anfahren eines Fahrzeugs auf glattem Untergrund verhindern. Durch ein derartiges Durchdrehen wird die Anfahrzeit des Fahrzeugs unnötig verlängert, seine Zugkraft vermindert, sowie die Seitenführungskraft herabgesetzt.

Das Durchdrehen der Räder wird von an diesen angeordneten Drehzahl-Sensoren erfasst und in einer Elektronik ausgewertet. Rutscht nur ein Rad durch, wird die zugehörige Radbremse z.B. über ein Ventil betätigt (Differentialbremse). Hierdurch wird über das Rad-Differential ein Antriebsmoment auf das andere, stillstehende Rad übertragen.

Drehen jedoch beide Antriebsräder durch, dann wird die Leistung des Antriebsmotors heruntergeregelt. Hierzu kann in das Gasgestänge eingegriffen und der vom Fahrer eingestellte Wert vermindert werden.

Die ASR-Motorregelung tritt also normalerweise in Kraft, wenn eine bestimmte Differenzgeschwindigkeit zwischen angetriebener und nicht angetriebener Achse vorliegt. Wird diese Geschwindigkeitsschwelle wieder unterschritten, schaltet die Motorregelung wieder ab und die Leistung des Motors wird auf den vom Fahrer über das Fahrpedal vorgegebenen Wert hochgeregelt.

Vor allem bei beladenem Fahrzeug und hohem Zugkraftniveau (stumpfes Eis, Schnee) tritt häufig ein kurzzeitiges Durchdrehen der Antriebsräder auf, welches die ASR-Motorregelung auslöst. Bereits nach geringer Leistungsrücknahme ist wieder Kraftschluß mit der Fahrbahn hergestellt; die Motorleistung wird wieder erhöht, was zu einem erneuten Durchdrehen der Antriebsräder führen kann. Bei sich wiederholendem Vorgang können somit im ungünstigsten Fall starke Triebstrangschwingungen auftreten, die ein Eingreifen des Fahrers erfordern.

Aufgabe der Erfindung ist es, eine gattungsgemäße ASR-Einrichtung so auszubilden, daß Triebstrangschwingungen nicht mehr auftreten können.

Diese Aufgabe wird erfindungsgemäß mit den kennzeichnenden Merkmalen des Anspruchs 1 gelöst, wobei die Merkmale der Unteransprüche vorteilhafte Ausgestaltungen und Weiterbildungen kennzeichnen.

Ein Ausführungsbeispiel der Erfindung ist in der Zeichnung dargestellt und wird im folgenden näher beschrieben. Es zeigen:
Fig. 1 ein schematisches Blockschaltbild der ASR-Einrichtung und
Fig. 2 Kennliniendiagramme.

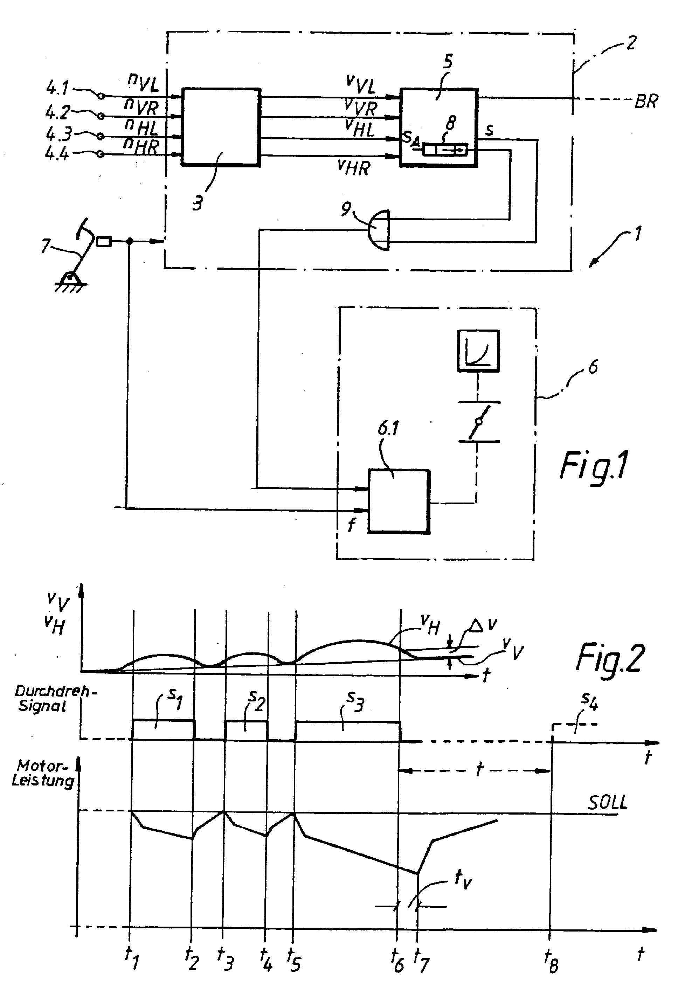

Gemäß Fig. 1 werden einer Signalaufbereitungsstufe 3 der Elektronik 2 der ASR-Einrichtung 1 von Drehzahlsensoren 4.1 bis 4.4 Raddrehzahlsignale n_{vL} und n_{vR} der nicht angetriebenen Räder und n_{HL} und n_{HR} der angetriebenen Räder zugefürt und von dieser in Geschwindigkeitssignale v_{vL}, v_{vR}, v_{HL} und v_{HR} umgesetzt, welche wiederum einer Komparatorschaltung 5 zugeführt werden. In dieser wird u.a. festgestellt, ob beide Antriebsräder Schlupf aufweisen und es werden z.B.mittlere Geschwindigkeiten vᵥ der nicht angetriebenen und v_{H} der angetriebenen Achse gebildet - wobei vᵥ der Fahrgeschwindigkeit gleichgesetzt werden kann und miteinander verglichen. Überschreitet nunmehr v_{H} gegenüber vᵥ einen vorgegebenen Schwellwert Δ v - beispielsweise 1,8 km/h - , so wird ein Durchdreh-Signal s erzeugt, welches einem Stellglied 6.1 einer Drosselklappensteuerung 6 zugeführt wird. Dieses Signal s hat gegenüber dem Sollwert-Signal f des Fahrpedals 7 Vorrang, so daß die direkte Beeinflußung des Motors über die Drosselklappe durch den Fahrer unterbunden ist. Das Signal s bewirkt nun, daß die Motorleistung während der Dauer des Signals herabgeregelt wird, wobei die Dauer des Signals s davon abhängt, wann aufgrund dieser Leistungsreduzierung v_{H} gegenüber vᵥ den vorgegebenen Schwellwert Δ v wieder unterschreitet. Wird dieser Schwellwert unterschritten, entfällt das Signal s und die Leistung des Motors wird wieder auf den vom Fahrer vorgegebenen Fahrpedal-Sollwert hochgeregelt. Dieser Vorgang kann sich mehrmals wiederholen, wie dies in Fig. 2 dargestellt ist. Treten jedoch mehrere Durchdreh-Signale ...s₁. s₂, s₃ in kurzen Zeitabständen ...., (t₃-t₂), (t₅-t₄) hintereinander auf und ist einer dieser Zeitabstände kleiner einer Grenzzeit tgrenz (beispielsweise t₅-t₄ ≦ 100 ms), so wird ab diesem Vorgang von der Komparatorschaltung 5 ein Ausgangssignal s_{A} erzeugt, welches auf ein monostabiles Zeitglied 8 einwirkt und dieses mit dem Abfall des letzten Durchdreh-Signals s₃ für eine vorgegebene Zeit tᵥ (=t₇-t₆) aktiviert. Dessen Ausgangssignal wirkt über ein ODER-Glied 9 - über welches auch das Signal s geführt ist - auf das Stellglied 6.1 ein, wodurch dessen Ansteuerdauer verlängert wird. Die Zeit tᵥ ist so gewählt - beispielsweise > 10 ms - , daß durch die Ansteuerverlängerung die Motorleistung so weit reduziert werden kann, daß ein ausreichender Abstand zum Schwellwert Δ v (=Schlupfgrenze) gegeben ist und in Folge Triebstrangschwingungen nicht mehr auftreten können.

Sollte jedoch aufgrund sehr starken Antriebsschlupfes nach diesem ASR-Regelvorgang innerhalb einer vorgegebenen Zeit t (=t₈-t₇) - beispielsweise < 860 ms - bereits ein weiteres Durchdreh-Signal s₄ erzeugt werden, so wird von der Komparatorschaltung 5 erneut ein Ausgangssignal s_{A1} generiert und dem Zeitglied 8 zugeführt, so daß dieses mit dem Abfall des weiteren Durchdreh-Signals s₄ wiederum für eine vorgegebene Zeit tᵥ aktiviert wird und somit die Ansteuerdauer des Stellgliedes verlängert.

Das Zeitglied 8 kann aber auch derart ausgebildet sein, daß es nach Ablauf der Verzögerungszeit tᵥ automatisch auf eine längere Verzögerungszeit tᵥ₁ umschaltet, so daß dann, wenn das Durchdreh-Signal s₄ innerhalb der Zeit t erzeugt und somit von der Komparatorschaltung das Ausgangssignal s_{A1} generiert wird, das Zeitglied mit dem Abfall des Durchdreh-Signals s₄ für die längere Verzögerungszeit tᵥ₁ aktiviert wird, bei weiteren folgenden Durchdrehsignalen innerhalb der Zeit t die Verzögerungszeit tᵥ₁ weiter verlängert wird (tᵥ₂, tᵥ₃, ...), jedoch bei einem Ausbleiben eines weiteren Durchdreh-Signals s₄ - also kein Durchdreh-Signal bzw. kein Anstoßen des Zeitgliedes durch ein Ausgangssignal s_{A1} innerhalb der Zeit t (z.B.< 860 ms) - automatisch wieder auf die kurze Zeitverlängerung tᵥ umschaltet.

Wie des weiteren aus Fig. 1 noch ersichtlich ist, wird von der Komparatorschaltung 5 bei erkanntem einseitigem Schlupf eines Antriebsrades auch noch ein Signal zur Ansteuerung der Radbremse BR erzeugt.

Obwohl im Ausführungsbeispiel eine Beeinflußung der Motorleistung durch einen Eingriff in die Drosselklappensteuerung beschrieben ist, kann selbstverständlich auch ein Eingriff in die Zündung oder die Kraftstoffzufuhr bzw. -menge erfolgen.

## Patentansprüche

1. Antriebsschlupfregeleinrichtung (1) für Kraftfahrzeuge bei der bei Durchdrehen eines angetriebenen Fahrzeugrades dieses gebremst wird
und bei der gegebenenfalls zusätzlich bei Durchdrehen beider angetriebener Räder die Motorleistung reduziert wird,
wobei ein Durchdrehen der Antriebsräder mittels Drehzahlsensoren (4.1-4.4) und einer Elektronik (2) erkannt wird
und bei Vorliegen eines Durchdreh-Signals (5) aufgrund des Überschreitens eines Differenzgeschwindigkeit-Schwellwertes (Δv) zwischen angetriebener und nichtangetriebener Fahrzeugachse die Leistung des Motors von der Elektronik (2) während der Dauer des Durchdreh-Signals (5) mittels eines Stellgliedes (6.1) herabgeregelt wird,
hingegen bei Abfall des Durchdreh-Signals (5) wieder auf den vom Fahrer vorgegebenen Fahrpedal-Sollwert hochgeregelt wird,
wobei ferner ein von der Elektronik (2) aktivierbares Zeitglied (8) vorgesehen ist,
**dadurch gekennzeichnet,**
daß die Elektronik (2) bei in Abständen unter einer bestimmten Grenzzeit (< t grenz) auftretenden Durchdreh-Signalen (S) ein Ausgangssignal (S_{A}) erzeugt, welches über das Zeitglied (8) die Aktivierung des herabregelnden Stellgliedes (6.1) über die Dauer des letzten Durchdreh-Signals (S₃) hinaus verlängert (tᵥ).

2. Antriebsschlupfregeleinrichtung nach Anspruch 1,
**dadurch gekennzeichnet,**
daß die Elektronik (2) erneut ein Ausgangssignal (S_{A1}) erzeugt, wenn zwischen einem weiteren Durchdreh-Signal (S₄) und dem Abfall des vorausgegangenen Durchdreh-Signals (S₃) eine vorgegebene Zeit (t) noch unterschritten ist.

3. Antriebsschlupfregeleinrichtung nach Anspruch 1 oder 2,
**dadurch gekennzeichnet,**
daß das Zeitglied (8) nach Ablauf der ersten Verzögerungszeit (tᵥ) automatisch auf eine längere Verzögerungszeit (tᵥ₁) umschaltet, jedoch automatisch wieder auf die erste Verlängerungszeit (tᵥ) umschaltet, wenn es innerhalb einer vorgegebenen Zeit (t) nicht erneut von einem Ausgangssignal (S_{A1}) aktiviert wird.

4. Antriebsschlupfregeleinrichtung nach Anspruch 3,
**dadurch gekennzeichnet,**
daß das Zeitglied (8) nach Ablauf der längeren Verzögerungszeit (tᵥ₁) automatisch auf eine noch längere Verzögerungszeit (tᵥ₂) umschaltet, nach deren Ablauf auf eine noch längere Zeit (tᵥ₃) usw., jedoch automatisch wieder auf die erste Verlängerungszeit (tᵥ) umschaltet, wenn es innerhalb einer vorgegebenen Zeit (t) nicht erneut von einem Ausgangssignal (S_{A2, 3..}) aktiviert wird.

## Claims

1. A drive slip control means (1) for motor vehicles, in which, in the event of a driven wheel of the vehicle spinning, the said wheel is braked, and in which if necessary, in the event of both driven wheels spinning, the engine output is additionally reduced, spinning or slipping of the driving wheels being recognised by rotary speed sensors (4.1 - 4.4) and an electronics unit (2) and, when a spin signal (S) is present, due to the differential speed threshold (Δv) between driven and non-driven vehicle axles is exceeded, the output of the engine is reduced by a regulating unit (6.1) for the duration of the spin signal (S), and on the other hand, when there is a reduction in the spin signal (S), the engine output is again stepped up to the desired level set by the driver via the accelerator, a timing element (8) also being provided, which can be activated by the electronics unit (2), characterised in that in the event of spin signals (S) occurring at intervals below a specific limit line (< t grenz), the electronics unit (2) generates an output signal (S_{A}) which, via the timing element (8), extends activation of the power diminishing regulating unit (6.1) beyond the duration of the last spin signal (S₃).

2. A drive slip control means according to claim 1, characterised in that the electronics unit (2) again generates an output signal (S_{A1}) if there is still a short-fall in respect of a predetermined time (t) between a further spin signal (S₄) and the reduction in the preceding spin signal (S₃).

3. A drive slip control means according to claim 1 or 2, characterised in that at the end of the first extension time (tᵥ) the timing element (8) switches over automatically to a longer delay time (tᵥ₁) but switches back again automatically to the first delay time (tᵥ) if it is not activated again by an output signal (S_{A1}) within a predetermined time (t).

4. A drive slip control means according to claim 3, characterised in that at the end of the longer delay time (tᵥ₁) the timing element (8) switches over automatically to a still longer delay time (tᵥ₂), at the end of which it is switched over to an even longer time (tᵥ₃) and so on, but switches back again automatically to the first extension time (tᵥ) unless activated again by an output signal (S_{A2}, ₃_{..}) within a given time (t).

## Revendications

1. Installation de régulation de patinage d'entraînement (1) destinée à des véhicules automobiles, dans laquelle une roue de véhicule automobile entraînée est freinée lorsqu'elle patine
et dans laquelle la puissance de moteur est de plus éventuellement réduite lorsque les deux roues motrices patinent,
un patinage des roues motrices étant déterminé au moyen de capteurs de vitesse de rotation (4.1 à 4.4) et d'une électronique (2), et la puissance du moteur étant réduite par l'électronique (2) au moyen d'un organe de réglage (6.1), en présence d'un signal de patinage (5) résultant du dépassement d'une valeur de seuil (ΔV) de différence entre les vitesses de l'axe moteur et de l'axe non moteur du véhicule, pendant la durée du signal de patinage (5),
et cette puissance étant en revanche à nouveau élevée, lors de la disparition au signal de patinage (5), à la valeur de consigne de la pédale d'accélérateur prédéterminée par le conducteur,
un relais temporisateur (8) habitable par l'électronique étant en outre prévu,
**caractérisée en ce que**
l'électronique (2) engendre, lorsque les signaux de patinage (S) apparaissent à des intervalles inférieurs à une limite de temps définie (< tₗᵢₘ), un signal de sortie (S_{A}) qui prolongé (tᵥ), à l'aide du relais temporisateur (8), l'activation de l'organe de réglage réduisant la puissance (6.1) au-delà de la durée du dernier signal de patinage (S₃).

2. Installation de régulation de patinage d'entraînement selon la revendication 1,
**caractérisée en ce que**
l'électronique (2) engendre de nouveau un signal de sortie (S_{A1}) lorsqu'un temps prédéterminé (t) ne s'est pas encore écoulé entre un signal de patinage ultérieur (S₄) et la retombée du signal de patinage précédent (S₃).

3. Installation de régulation de patinage d'entraînement selon la revendication 1 ou 2,
**caractérisée en ce que**
le relais temporisateur (8) se commute automatiquement, après l'écoulement du premier temps de retard (tᵥ) à un temps de retard plus long (tᵥ₁) mais se commute cependant automatiquement à nouveau au premier temps de prolongement (tᵥ) lorsqu'il n'est pas activé de nouveau par un signal de sortie (S_{A1} à l'intérieur d'un temps prédéterminé (t) ).

4. Installation de régulation de patinage d'entraînement selon la revendication 3,
**caractérisée en ce que**
le relais temporisateur (8) se commute automatiquement à un temps de retard encore plus long (tᵥ₂) après l'écoulement du temps de retard plus long (tᵥ₁), et à un temps encore plue long (tᵥ₃) après l'écoulement de ceux-ci, et ainsi de suite, mais se commute cependant automatiquement de nouveau au premier temps de prolongation (tᵥ) lorsqu'il n'est pas activé de nouveau par un signal de sortie (S_{A2}, ₃, et ainsi de suite) à l'intérieur d'un temps prédéterminé (t).
